# FASCICULE DE BREVET EUROPEEN

(11) **EP 4 256 188 B1**
(45) Date de publication et mention de la délivrance du brevet: **23.04.2025**
(21) Numéro de dépôt: 21816111.5
(22) Date de dépôt: 03.12.2021
(51) Int. Cl.: F02C 7/047, F02C 7/057, F02C 7/08, F02C 7/143

(54) **PROCÉDÉ DE PRODUCTION D'ÉNERGIE ÉLECTRIQUE ET/OU MÉCANIQUE À DESTINATION D'UN SYSTÈME CONSOMMATEUR ET SYSTÈME DE PRODUCTION ASSOCIÉ**
VERFAHREN ZUR ERZEUGUNG ELEKTRISCHER UND/ODER MECHANISCHER ENERGIE FÜR EIN VERBRAUCHERSYSTEM UND ZUGEHÖRIGES PRODUKTIONSSYSTEM
METHOD FOR PRODUCING ELECTRICAL AND/OR MECHANICAL ENERGY FOR A CONSUMER SYSTEM, AND ASSOCIATED PRODUCTION SYSTEM

(30) Priorité: 03.12.2020 FR 2012632
(43) Date de publication de la demande: 11.10.2023
(73) Titulaire: TOTALENERGIES ONETECH, 92400 Courbevoie (FR)
(72) Inventeur: HACHEM, Joe, 78000 VERSAILLES (FR); MOLIERE, Michel, 90000 BELFORT (FR); ORHON, Dominique, Hubert, Jean, Yves, Marie, 64000 PAU (FR); SCHUHLER, Thierry, Fernand, 76290 FONTAINE LA MALLET (FR); ZOUGHAIB, Assaad, 78120 RAMBOUILLET (FR)
(74) Mandataire: Lavoix
(86) Numéro de dépôt international: PCT/EP2021/084164
(87) Numéro de publication internationale: WO 2022/117812

(56) Documents cités:
- EP-A1- 2 733 318
- US-A1- 2010 146 981
- US-B1- 7 065 953

## Description

La présente invention concerne un procédé de production d'énergie électrique ou/et mécanique à destination d'un système consommateur, selon le préambule de la revendication 1.

Un « système consommateur » est par exemple un réseau, une installation ou/et un équipement propre à recevoir de l'énergie électrique ou/et mécanique et à la consommer.

La puissance générée par le système de production est par exemple une puissance électrique. Le système consommateur est alors avantageusement un réseau électrique, notamment d'une installation de production de fluides, en particulier d'une installation de production d'hydrocarbures en mer.

En variante, le réseau électrique est celui d'une installation industrielle, ou/et d'un ensemble de particuliers ou/et d'entreprises.

Alternativement, le réseau électrique est un réseau national ou transnational interconnecté.

En variante, la puissance générée est une puissance mécanique. Le système consommateur est un système entrainé en rotation d'une installation industrielle, en particulier un compresseur ou une pompe, notamment dans une installation de production de fluide.

Les turbines à combustion sont utilisées pour produire de l'énergie électrique ou/et mécanique dans de nombreuses applications industrielles, notamment pour leurs bons rendements, leur compacité, leur fiabilité, leur capacité à être relativement aisément opérées et maintenues, leur flexibilité opérationnelle et leurs coûts compétitifs.

En premier lieu, ces turbines sont flexibles par la nature du carburant qu'elles sont capables de brûler, à savoir liquides (diesel, fuel, ammoniac, etc.) ou gazeux (hydrogène, gaz naturel, gaz de biomasse, etc.).

Ces turbines présentent aussi une flexibilité opérationnelle lorsque la puissance demandée par l'installation varie significativement au cours du temps.

Ceci est le cas notamment dans les installations de production de fluides, dans lesquelles des pics de demande électrique et des délestages de charges par le réseau électrique de l'installation sont susceptibles de se produire au cours du temps.

En outre, dans ces installations, la puissance électrique moyenne requise au cours du temps varie significativement, entre le début et la fin de leur exploitation

Par ailleurs, lorsque le réseau électrique est partiellement alimenté par des sources d'énergies renouvelables, les turbines à combustion sont aptes à compléter ou suppléer la production d'énergie renouvelable, lorsque les conditions environnementales rendent cette production insuffisante pour les besoins de l'installation.

Lors de la conception et du dimensionnement d'un système de production d'énergie comportant des turbines à combustion, la puissance électrique maximale requise par le réseau électrique est généralement prédéfinie.

Une unité de génération de puissance (désignée par le terme « power generation unit » ou PGU en anglais) comportant une pluralité de turbines à combustion est alors fournie, avec un dimensionnement adapté pour que les turbines à combustion à leur puissance à pleine charge soient aptes à fournir la puissance électrique maximale requise. Le rendement des turbines à gaz est maximal lors d'une utilisation à pleine charge.

Toutefois, au cours de la vie de l'installation et aussi en fonction des conditions climatiques, les turbines fonctionnent plutôt à charge partielle, et rarement à pleine charge.

Ceci conduit à des conséquences néfastes, puisque l'opération à charge partielle des turbines à combustion dégrade significativement le rendement.

La consommation de carburant nécessaire à la génération de puissance est donc augmentée, et par suite, la génération de gaz à effet de serre dans le cas de carburant fossiles.

Pour pallier partiellement ce problème, il est connu de l'article « Proceedings of ECOS 2020, The 33rd International Conference on Efficiency, Cost Optimizationn Simulation and Environmental Impact of Energy Systems », June 29 - July 3 2020 Osaka, Japan » d'augmenter à faible charge la température des gaz d'entrée dans le compresseur de la turbine à combustion, afin d'améliorer le rendement.

Il reste cependant un besoin d'optimisation du fonctionnement de l'unité de génération de puissance sur toute la gamme de puissance électrique qu'elle est susceptible de fournir.

US7065953, US2010/0146981 et EP2733318 décrivent d'autres procédés et systèmes de production d'énergie comprenant des turbines alimentées en gaz par une chambre de combustion.

Un but de l'invention est de fournir, en limitant l'investissement, un procédé de production d'énergie, utilisant une unité de génération de puissance comprenant au moins une turbine à combustion, dans lequel la production d'énergie s'effectue avec des émissions moindres de gaz carbonés.

À cet effet, l'invention a pour objet un procédé selon la revendication 1.

Le procédé selon l'invention peut comprendre l'une ou plusieurs des caractéristiques des revendications 2 à 9 ou la caractéristique suivante, prise(s) isolément ou suivant toute combinaison techniquement possible :
- il comprend une étape préalable de détermination de conditions définies de site, et de définition et/ou de calcul de la puissance électrique ou/et mécanique maximale requise prédéfinie devant être fournie au système consommateur aux conditions définies de site.

L'invention a également pour objet un système de production d'énergie électrique ou/et mécanique destinée à un système consommateur selon la revendication 10.

Le système selon l'invention peut comprendre l'une ou plusieurs des caractéristiques des revendications 11 à 15.

L'invention sera mieux comprise à la lecture de la description qui va suivre, donnée uniquement à titre d'exemple, et faite en se référant aux dessins annexés, sur lesquels :
- [Fig 1] la figure 1 est une vue schématique d'un premier système de production d'énergie selon l'invention ;
- [Fig 2] la figure 2 est un schéma illustrant la mise en œuvre du système de la figure 1 avec plusieurs turbines à combustion ;
- [Fig 3] la figure 3 est une vue d'un graphe illustrant des stratégies de pilotage du refroidissement du flux d'air introduit dans la turbine à combustion, dans la mise en œuvre du procédé selon l'invention ;
- [Fig 4] la figure 4 est une comparaison des rendements obtenus entre un procédé de l'état de la technique et un procédé selon l'invention ;
- [Fig 5] la figure 5 est une vue d'un graphe illustrant un exemple d'une demande en puissance électrique requise par un réseau électrique au cours du temps ;
- [Fig 6] la figure 6 est une vue illustrant le pourcentage de charge développé par l'unité de génération de puissance d'un système de production d'énergie selon l'état de la technique et d'un système de production d'énergie selon l'invention par rapport à la puissance électrique définie de site en fonction du temps, pour répondre à la demande en puissance électrique illustrée sur la figure 5 ;
- [Fig 7] la figure 7 illustre le rendement au cours du temps d'un système de production d'énergie de l'état de la technique, en comparaison avec un système de production d'énergie selon l'invention, en réponse à la demande en puissance électrique illustrée sur la figure 5.

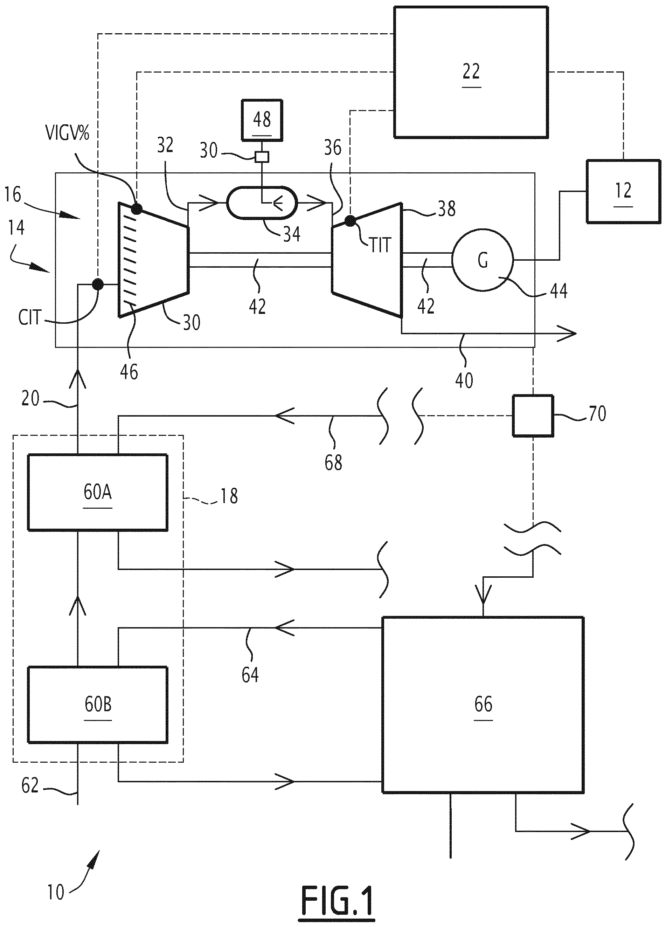

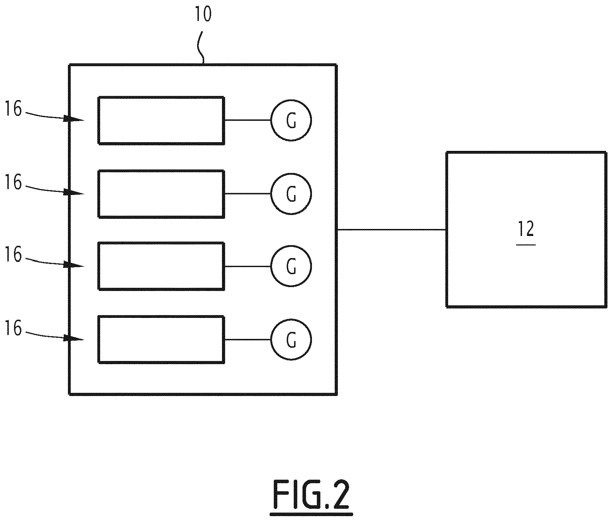

Un procédé de production d'énergie selon l'invention est mis en œuvre dans un système de production d'énergie 10 représenté schématiquement sur les figures 1 et 2.

Dans cet exemple, l'énergie produite par le système de production 10 est de l'énergie électrique, destinée à être fournie à un système consommateur d'énergie électrique, tel qu'un réseau électrique 12. En variante, comme on le décrira plus bas, l'énergie produite par le système de production 10 est de l'énergie mécanique destinée à un système consommateur d'énergie mécanique, en particulier au sein d'une installation d'exploitation de fluides.

Dans cet exemple, le procédé est destiné à produire de l'énergie électrique pour alimenter un réseau électrique 12 requérant une puissance électrique pour faire fonctionner des équipements.

Le réseau électrique 12 est par exemple un réseau d'alimentation électrique d'une installation d'exploitation de fluides, ou plus généralement d'une installation industrielle. En variante, le réseau électrique est un réseau destiné à alimenter électriquement des particuliers et/ou des entreprises, ou encore sur un réseau national ou transnational interconnecté.

Le réseau électrique 12 requiert à chaque instant la fourniture d'une puissance électrique qui est engendrée par le système de production 10.

En particulier, le réseau électrique 12 est configuré pour requérir de la part du système de production 10, dans des conditions définies de site en température, en pression, et avantageusement en humidité, une puissance maximale requise Pmax prédéfinie de site, qui est utilisée pour concevoir le système de production d'énergie électrique 10.

La puissance maximale Pmax requise prédéfinie de site aux conditions définies de site est avantageusement calculée lors de la conception du système de production 10, à partir des caractéristiques du réseau électrique 12 et des utilités qui y sont connectés.

Les conditions définies de site ou « site rated conditions » sont avantageusement celles définies dans les normes API 616 et API RP11 PGT. Elles sont préalablement déterminées lors de la conception de l'installation, en fonction des conditions météorologiques et atmosphériques sur le site.

Les conditions définies de site en température sont par exemple une température maximale rencontrée au niveau de l'installation ou/et une température moyenne rencontrée au niveau de l'installation, ces températures étant définies avantageusement en entrée de turbine.

Les conditions définies de site en pression sont par exemple une pression atmosphérique minimale ou/et maximale rencontrée au niveau de l'installation, ou/et une pression atmosphérique moyenne rencontrée au niveau de l'installation, ces pressions étant définies avantageusement en entrée de turbine et/ou en sortie de turbine.

Les conditions définies de site en humidité sont par exemple une humidité maximale rencontrée au niveau de l'installation, ou/et une humidité moyenne rencontrée au niveau de l'installation, ces humidités étant définies avantageusement en entrée de turbine.

Les conditions définies de site sont par exemple les conditions ambiantes de dimensionnement utilisées en ingénierie.

A titre d'exemple, une unité de génération de puissance installée sur un support flottant au large du Nigéria, dans le Golfe de Guinée, par exemple, peut être dimensionnée en prenant en compte les conditions de site suivantes :
- pression au niveau de la mer variant entre 0,9989 barₐ et 1,017 barₐ ;
- température ambiante variant entre 18,9°C et 33,7°C;
- humidité relative variant entre 46,23% et 92,96%.

La puissance maximale Pmax prédéfinie de site est alors calculée aux conditions définies de site suivantes : pression = 0,9989 barₐ ; température = 30°C ; humidité relative = 92,96%.

Les conditions définies de site sont généralement consignées dans les dossiers de conception de l'installation 10. Elles sont parfois communiquées aux autorités gouvernementales dans les dossiers réglementaires attachés au système de production 10.

La puissance demandée par le réseau électrique 12 au système de production 10 au cours du temps est donc comprise entre une puissance nulle, en cas d'arrêt total des turbines et prise de relais par des générateurs de secours, une puissance de mise en veille prédéfinie pour le réseau électrique 12, et la puissance électrique maximale requise Pmax prédéfinie de site, aux conditions définies de site mentionnées ci-dessus.

En référence à la figure 1, le système de production d'énergie 10 comporte une unité de génération de puissance 14, comportant au moins une turbine de combustion 16, l'unité de génération de puissance 14 étant capable de produire, aux conditions définies de site, une puissance définie de site Pn inférieure à la puissance maximale requise Pmax prédéfinie de site pour le réseau électrique 12.

Le système de production d'énergie 10 comporte en outre un système d'échange thermique 18, propre à refroidir ou à réchauffer un flux d'air 20 destiné à alimenter la ou chaque turbine de combustion 16, et un système de commande 22, propre à permettre le pilotage du système d'échange thermique 18 et de la ou de chaque turbine à gaz 16, pour contrôler la température du flux gazeux circulant au sein de chaque turbine à gaz 16.

En référence aux figures 1 et 2, l'unité de génération de puissance 14 comporte au moins une turbine de combustion 16, préférentiellement, plusieurs turbines de combustion 16 parallèles.

Le nombre de turbines de combustion 16 est généralement compris entre 1 et 10, par exemple entre 3 et 8. Un nombre plus élevé de turbines de combustion 16 peut être prévu pour des installations requérant plus de puissance électrique.

Chaque turbine de combustion 16 est propre à engendrer, aux conditions définies de site, une puissance définie de site Pnt, résultant de sa construction.

La puissance définie de site ou « site rated power » est avantageusement définie dans les normes API 616 et API RP 11 PGT ou est la « puissance in situ » définie dans la norme ISO 3977-2, aux conditions de site.

Selon l'invention, la somme des puissances définies de site Pnt propres à être engendrées par chacune des turbines 16 aux conditions définies de site, qui constitue la puissance définie de site Pn de l'unité de génération de puissance 14 est inférieure à la puissance maximale requise Pmax prédéfinie aux conditions définies de site.

Par exemple, la puissance définie de site Pn propre à être engendrée par l'unité de génération de puissance 14 aux conditions définies de site est comprise entre 70 % et 90 %, avantageusement entre 75 % et 85 % de la puissance maximale requise Pmax prédéfinie pour le réseau électrique 12 aux conditions définies de site.

Chaque turbine à combustion 16 est une turbine à gaz. Chaque turbine de combustion 16 comporte un compresseur 30, destiné à comprimer le flux d'air entrant 20, pour produire un flux d'air comprimé 32, une chambre de combustion 34, propre à permettre le mélange du flux d'air comprimé 32 avec un combustible, et la combustion du combustible dans la chambre de combustion 34 pour produire un flux d'alimentation de turbine 36.

La turbine à combustion 16 comporte en outre une turbine de détente dynamique 38, propre à recevoir le flux d'alimentation de turbine 36 et à le détendre dynamiquement pour produire un flux détendu 40.

La turbine à combustion 16 comporte également un arbre 42 entraîné en rotation par la turbine de détente dynamique 38, et un générateur 44 présentant un rotor entraîné en rotation par la turbine de détente dynamique 38 via l'arbre 42. Dans cet exemple, le compresseur 30 est aussi monté sur le même arbre 42.

En particulier, la turbine à combustion 16 comporte un arbre 42 unique présentant une vitesse de rotation constante.

Avantageusement, pour assurer un pilotage du débit du flux d'air comprimé 32 fourni à la chambre de combustion 34, le compresseur 30 comporte une pluralité d'ailettes de guidage 46 du flux d'air 20, définissant entre elles une ouverture variable VIGV%. L'ouverture variable VIGV% des ailettes de guidage 46 contrôle le débit de flux d'air 20 admis dans le compresseur 30.

La chambre de combustion 34 est raccordée à une source 48 de combustible par l'intermédiaire d'une vanne 50 de réglage de débit d'injection de combustible. La quantité de combustible injectée dans la chambre de combustion 34 est ainsi réglable par pilotage de la vanne 50.

Le combustible présent dans la source 48 et injecté dans la chambre de combustion est de préférence du gaz naturel.

Le générateur 44 comprend un rotor entraîné en rotation par l'arbre 42, et un stator. Il est propre à produire une puissance électrique, qui est transmise au réseau électrique 12 par une liaison électrique.

La puissance électrique engendrée par le générateur 44 dépend notamment de la quantité de flux d'air entrant 20 introduit dans le compresseur 30, de la température CIT d'entrée du flux d'air 20 dans le compresseur 30, de la quantité de combustible injectée dans la chambre de combustion 34 qui influe sur la température d'entrée de turbine TIT du flux d'alimentation de turbine 36.

Le système d'échange thermique 18 est propre, lorsque la puissance requise par le réseau électrique 12 est supérieure à la puissance définie de site Pn aux conditions définies de site, à refroidir le flux d'air 20 pour diminuer la température CIT d'entrée dans le compresseur 30.

Le système d'échange thermique 18 est propre au contraire à réchauffer le flux d'air 20, dans le cas où la puissance requise par le réseau électrique 12 est inférieure à la puissance définie de site Pn aux conditions définies de site, pour augmenter la température CIT d'entrée dans le compresseur 30.

À cet effet, avantageusement, le système d'échange thermique 18 comporte au moins un échangeur thermique 60A, 60B, propre à permettre l'échange thermique sans contact entre un flux d'air initial 62, destiné à former le flux d'air 20, et respectivement un courant de refroidissement 64, raccordé à une source froide 66, et un courant de réchauffage 68, raccordé à une source chaude 70.

En variante (non représentée), le système d'échange thermique 18 est propre à mélanger le flux d'air initial 62 avec un fluide chaud ou avec un fluide froid pour réchauffer ou refroidir le flux d'air 20 introduit dans le compresseur 30

Dans cet exemple purement illustratif, le système d'échange thermique 18 comporte deux échangeurs thermiques distincts 60A, 60B montés en série.

En variante, les échangeurs 60A, 60B sont montés en parallèle ou sont remplacés par un échangeur thermique unique mettant en relation d'échange thermique les courants 64, 68, et le flux 62.

La source froide 66 est par exemple un refroidisseur à absorption, propre à produire par absorption le courant de refroidissement 64 à partir d'un flux chaud provenant de la source chaude 70. Le refroidisseur à absorption est par exemple un refroidisseur de type eau/LiBr.

La source chaude 70 est par exemple une source d'un fluide réchauffé par le flux détendu 40 issu de la turbine de détente dynamique 38. Dans un mode de réalisation, le flux détendu 40 entre en relation d'échange thermique avec un courant destiné à être réchauffé au sein de la source chaude 70. En variante, le flux détendu 40 est utilisé directement pour constituer tout ou partie du courant de réchauffage 68.

Le système de commande 22 comporte par exemple au moins un calculateur comportant une mémoire contenant des modules logiciels, et un processeur propre à exécuter les modules logiciels présents dans la mémoire.

Le système de commande 22 est propre à piloter l'unité de génération de puissance 14, et le système d'échange thermique 18 pour fournir au réseau électrique 12 la puissance électrique requise à chaque instant.

Il est propre à recevoir, du réseau électrique 12 une information sur la puissance électrique requise à chaque instant par le réseau électrique 12.

Le système de commande 22 est raccordé à des capteurs de mesure de la température CIT d'entrée de compresseur, de l'ouverture VIGV% des ailettes 46 et de la température calculée TIT d'entrée de turbine.

Il est par ailleurs raccordé à un système de commande de l'ouverture des vannes 46, à un système de réglage de la quantité de combustible ajouté dans la chambre de combustion 34, et à un système de pilotage de la température des courants 64, 68.

Comme indiqué plus haut, dès que la puissance électrique demandée par le réseau électrique 12 est supérieure à la puissance définie de site Pn dans les conditions définies de site, le système de commande 22 est propre à activer un refroidissement du flux d'air entrant 20 à l'aide du système d'échange thermique 18, pour fournir un flux d'air entrant 20 refroidi.

Au contraire, dès que la puissance électrique demandée par le réseau électrique 12 est inférieure à la puissance définie de site Pn aux conditions définies de site, le système de commande 22 est propre à activer un chauffage du flux d'air entrant 20 à l'aide du système d'échange thermique 18, pour fournir un flux d'air entrant 20 réchauffé.

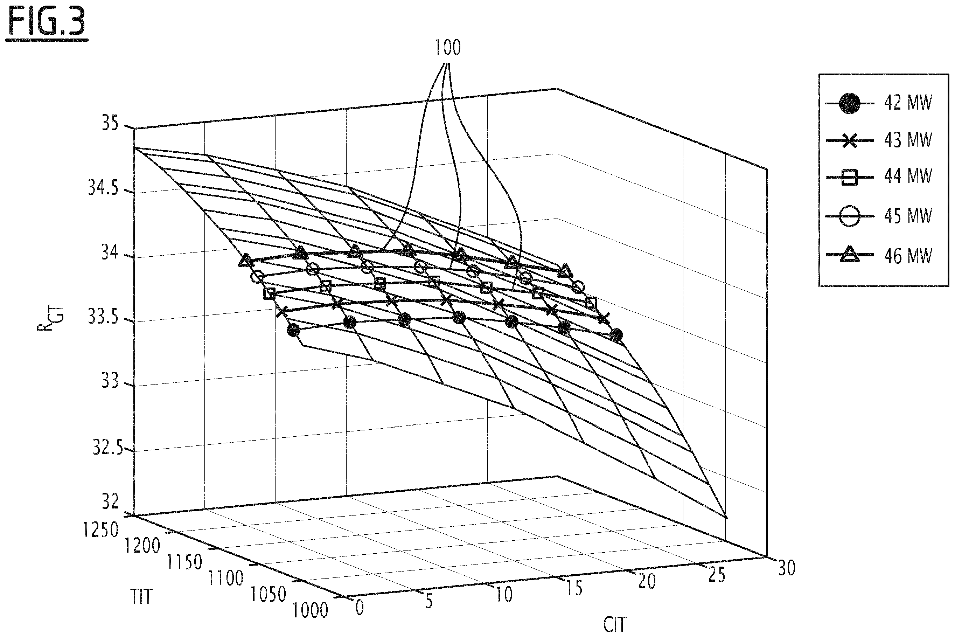

Avantageusement, le système de commande 22 est propre à piloter la température d'entrée de compresseur CIT et la température d'entrée de turbine TIT pour maximiser le rendement de chaque turbine à combustion 16, sur la base de courbes d'iso-puissance délivrées 100 illustrées par la figure 3.

Le rendement R_{GT} obtenu sur chacune des courbes d'iso-puissance délivrées 100 est calculé en fonction de la température d'entrée de compresseur CIT et de la température d'entrée de turbine TIT.

De préférence, pour maximiser le rendement de la turbine de combustion 16, la température CIT d'entrée de compresseur minimale atteignable est choisie. Cette température est limitée par l'humidité relative de l'air, pour éviter toute condensation dans le compresseur 30. La température d'entrée de compresseur CIT est par exemple comprise entre 5 °C et 50 °C.

Parallèlement, la température d'entrée de turbine TIT est ajustée en fonction de la puissance requise par le réseau électrique, en maintenant la température d'entrée de turbine TIT entre une limite basse et une limite haute. La limite basse est la limite à laquelle la stabilité de la flamme de combustion est obtenue. La limite haute est une température dépendante des caractéristiques des matériaux formant la turbine, et des contraintes de spécification de la machine.

La température d'entrée de turbine TIT est par exemple comprise entre 800 ° C et 1700 °C.

Dans le cas où la limite basse de température d'entrée de turbine TIT est atteinte et la puissance fournie n'est pas atteignable, la température d'entrée de compresseur CIT est augmentée d'un incrément.

Le refroidissement du flux d'air 20 dans le système d'échange thermique 18, et par suite, de la température d'entrée de compresseur CIT augmente la quantité de matière fournie à la turbine de détente dynamique 38.

Ceci permet à la turbine à combustion 16 de fournir une puissance supérieure à la puissance définie de site qu'elle fournit aux conditions définies de site. Cette puissance fournie en présence du refroidissement du flux d'air 20 est par exemple comprise entre 101% et 120% de la puissance définie de site Pn qu'elle fournit aux conditions définies de site. En outre, le rendement de la turbine à combustion 16 est augmenté lorsque la puissance fournie est supérieure à 100 % de la puissance définie de site.

Ainsi, lors de la conception du système de production 10, il est possible de sous-dimensionner l'unité de génération de puissance 14, pour qu'il fournisse aux conditions définies de site, une puissance définie de site Pn inférieure à la puissance maximale requise prédéfinie Pmax aux conditions de site.

Lors de la mise en œuvre d'un procédé de production d'énergie utilisant le système de production 10 selon l'invention, la puissance manquante est compensée par le système de commande 22 qui applique un refroidissement du flux d'air 20 introduit dans le compresseur 30 de la turbine à combustion 16, dès que la puissance requise par le réseau électrique 12 est supérieure à la puissance définie de site Pn.

De la même manière, dès que la puissance requise par le réseau électrique 12 est inférieure à la puissance définie de site Pn, le système de commande 22 augmente la température d'entrée de compresseur CIT en réchauffant le flux d'air 20, par exemple dans une gamme allant de 15 °C à 50 °C. Il diminue avantageusement la température d'entrée de turbine TIT, par exemple de 100 °C, tout en augmentant simultanément l'ouverture VIGV% des ailettes 46. Ceci conduit à fonctionner, avec un rendement augmenté aux basses puissances délivrées, sans que la réduction de la puissance maximale de la turbine à combustion 16, induite par le chauffage de l'air, ne pose problème, puisque le fonctionnement est en marche partielle.

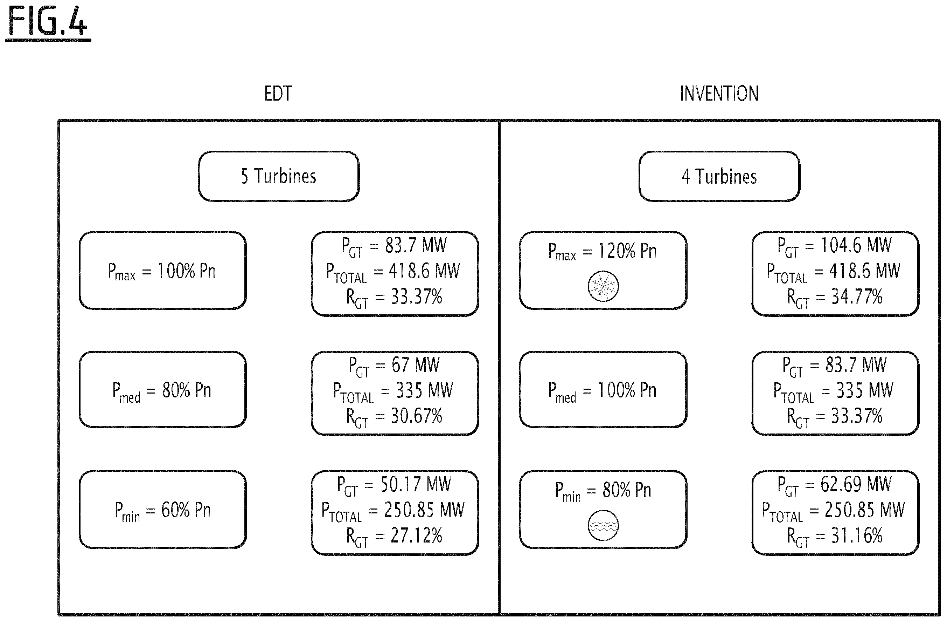

En outre, comme illustré par l'exemple numérique de la figure 4, ceci limite le nombre de turbines à combustion 16 nécessaires, (en passant ici de 5 turbines à 4 turbines), ce qui réduit les coûts d'investissement et d'opération. Le nombre limité de turbines à combustion 16 est compensé par une gamme de fonctionnement plus large, qui produit d'une manière surprenante un meilleur rendement.

Globalement, grâce à l'utilisation synergique du refroidissement du flux d'air 20 lorsque la puissance requise est au-dessus de la puissance définie de site Pn et du réchauffage du flux d'air 20 lorsque la puissance requise est en dessous de la puissance définie de site Pn, la turbine à combustion 16 opère dans une gamme de puissances délivrées la plus large possible en partant de la puissance maximale requise prédéfinie Pmax, jusqu'à une puissance minimale, déterminée par les limites de fonctionnement de la chambre de combustion 34.

Il est ainsi possible de s'adapter à des charges variées, malgré un sous-dimensionnement de l'unité de génération de puissance 14, ce qui produit une réduction globale des investissements pour construire et opérer le système de production d'énergie 10.

Par ailleurs, le système de production d'énergie 10 selon l'invention est propre à s'adapter et à s'intégrer énergétiquement dans une installation de cogénération d'énergie ou de chaleur. En particulier, comme représenté sur la figure 1, la chaleur produite à la sortie de la turbine à gaz 16 est propre à être utilisée directement ou indirectement (dans le cas d'un chauffage de vapeur en cogénération d'énergie ou de chauffage) pour chauffer le flux d'air 20 à l'entrée de la turbine, aussi bien que pour le refroidir, en utilisant un refroidisseur fonctionnant par exemple à l'aide d'un cycle à absorption.

Le rendement obtenu par le système de production électrique 10 selon l'invention est amélioré sur toute la gamme de puissances délivrées. Par ailleurs, la puissance délivrée au réseau électrique 12 par le système de production 10 étant la plupart du temps inférieure à la puissance maximale requise Pmax prédéfinie, chaque turbine à combustion 16 de l'unité de génération de puissance 14 est susceptible de fonctionner plus souvent au voisinage de leur puissance définie de site Pn, ce qui améliore le rendement.

Ceci est illustré par la figure 4, qui montre que pour une puissance délivrée Pmed correspondant à 80 % de la puissance maximale requise prédéfinie Pmax, cette puissance délivrée conduit à un fonctionnement en charge partielle à 80% de la puissance définie de site Pn pour un système de l'état de la technique à 5 turbines, avec un rendement dégradé par rapport au fonctionnement à la puissance définie de site Pn. Au contraire, pour le système de production 10 selon l'invention, qui comprend uniquement 4 turbines, la puissance délivrée Pmed correspond à approximativement 100 % de la puissance définie de site Pn pour le système de production 10, et l'augmentation du rendement est de 3 %.

Par ailleurs, une augmentation de rendement est également observée lorsque l'unité de génération de puissance 14 fournit une puissance délivrée Pmax au-delà de sa puissance définie de site Pn, par refroidissement du flux d'air entrant 20, ou une puissance délivrée Plow plus en-deçà de sa puissance définie de site Pn, par réchauffage du flux d'air entrant 20.

Les valeurs de la puissance P_{GT} délivrée par chaque turbine à combustion 16, de la puissance totale P_{TOTAL} correspondant au produit de la puissance P_{GT} par le nombre de turbines installées et du rendement R_{GT} de la turbine à combustion 16 sont donnés sur la figure 4 pour chaque point de fonctionnement.

Il existe donc une synergie de fonctionnement en utilisant à la fois le refroidissement et le réchauffage du flux d'air 20 pour obtenir un rendement amélioré de l'installation, et une meilleure opérabilité, tout en réduisant l'investissement nécessaire.

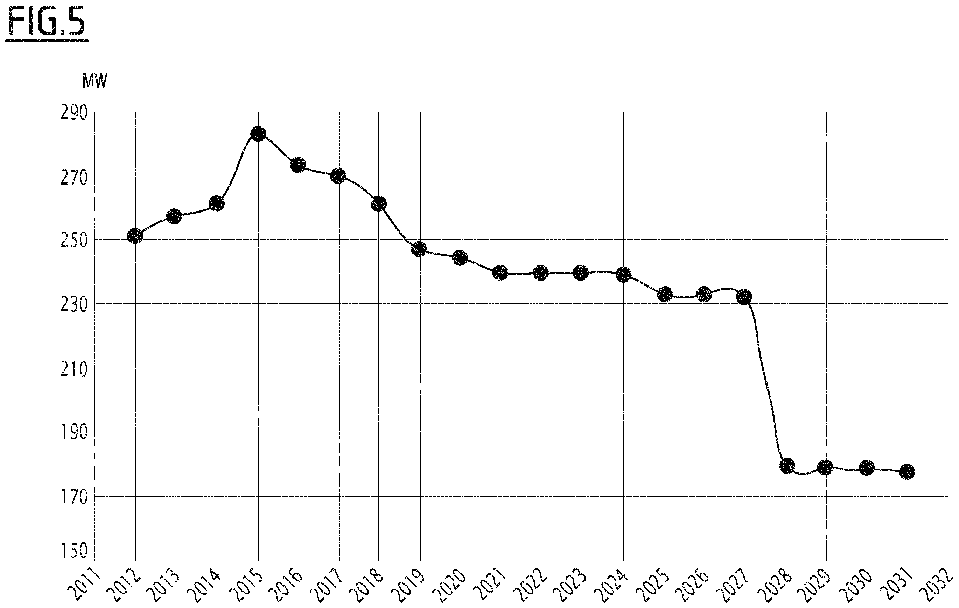

Ceci est illustré par la simulation numérique d'une mise en œuvre du procédé de production d'énergie reportée sur les figures 5 à 7.

La figure 5 illustre la demande moyenne en puissance électrique du réseau électrique 12 au cours du temps, pour une installation d'exploitation de fluides en mer. Dans cet exemple, les conditions définies de site de l'installation incluent une température ambiante de 30 °C, une humidité relative de 60 %, et une pression atmosphérique standard de 760 millimètres de mercure, soit 101325 Pa.

L'unité de génération de puissance 14 comprend trois turbines à combustion 16 opérant simultanément, et une en veille. La demande électrique est simulée sur vingt ans.

Comme illustré par la figure 5, la demande électrique maximale est de 285 MW aux conditions définies de site prédéfinies ci-dessus. La demande électrique minimale est de 177 MW, avec une demande électrique moyenne égale à 236 MW.

La puissance électrique maximale prédéfinie Pmax aux conditions définies de site est prédéfinie comme étant égale à 315 MW. Le système de production d'énergie électrique de l'état de la technique est conçu pour fournir, aux conditions définies de site, une puissance définie de site Pn égale à Pmax.

Dans cet exemple, le système de production d'énergie électrique de l'état de la technique comporte trois turbines à combustion GT11N2 commercialisées par la société GE, présentant chacune une puissance définie de site Pn égale à 105 MW à 30°C.

Au contraire, les turbines à combustion 16 du système de production 10 selon l'invention sont de taille plus petite que celles du système de l'état de la technique. Elles produisent une puissance définie de site Pn aux conditions définies de site inférieure à la puissance maximale Pmax, ici sensiblement égale à 79% de la puissance maximale Pmax.

Dans cet exemple, le système de production 10 selon l'invention comporte trois turbines à combustion Frame 7F.03 commercialisées par la société GE, présentant chacune une puissance définie de site Pn égale à 83 MW à 30°C.

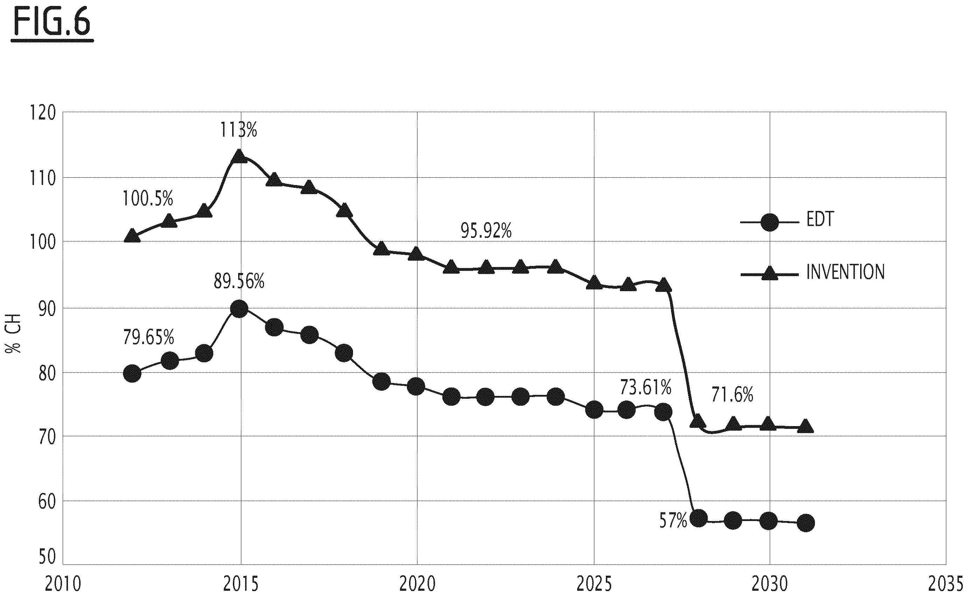

Pour la mise en œuvre du procédé à l'aide du système de production 10 selon l'invention, dès que le pourcentage de charge requise (noté « % CH » sur la figure 6), correspondant au rapport de la puissance requise à la puissance définie de site Pn, est supérieur à 100 %, un refroidissement du flux d'air entrant 20 est engendré par le système d'échange thermique 18, et dès que le pourcentage de charge requise est inférieur à 100 %, un réchauffage de la température du flux d'air entrant 20 est opéré.

La figure 6 illustre le pourcentage de charge de chaque turbine à combustion 16 pour le système de l'état de la technique (courbe EDT) et pour le système de production 10 selon l'invention (courbe INVENTION).

Durant les premières années de fonctionnement (de 2013 à 2019 environ), la puissance requise par le réseau électrique 12 est supérieure à la puissance définie de site Pn produite par l'unité de génération de puissance 14 du système de production 10 selon l'invention.

Le système de production 10 selon l'invention fonctionne avec un refroidissement du flux d'air entrant 20, qui améliore le rendement.

Ensuite, la puissance requise est inférieure à la puissance définie de site, et diminue sensiblement au cours du temps, conduisant à des pourcentages de charge notablement inférieurs à 100 %. Le système de production 10 selon l'invention fonctionne alors avec un réchauffage du flux d'air entrant 20.

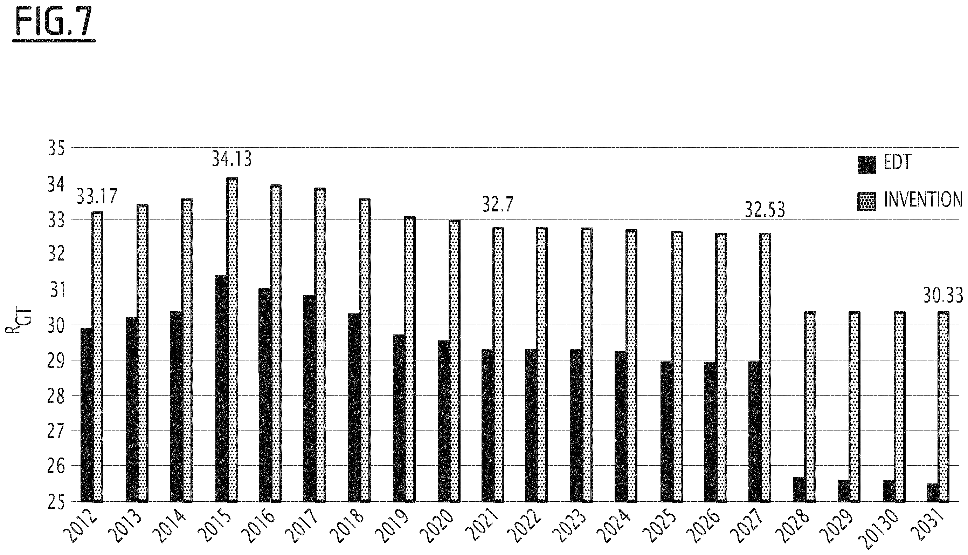

Comme illustré par la figure 7, quelle que soit le pourcentage de charge requise, le rendement de l'unité de génération de puissance 14 selon l'invention est largement supérieur au rendement de celui de l'état de la technique.

Les augmentations absolues de rendement sont de l'ordre de 0,4 % à 1,1 %, soit entre 1 % et 3,6 % en relatif, ce qui est considérable, compte tenu de la puissance électrique consommée au cours du temps.

Le tableau 1 ci-dessous illustre les gains produits par un système de production d'énergie 10 selon l'invention, en utilisant un combustible formé par du gaz naturel ayant une valeur calorifique basse de 50,048 MJ/kg.

Comme représenté sur ce tableau, la quantité de combustible économisée est de l'ordre de 1,112 MT, ce qui évite de produire 3,087 MT de dioxyde de carbone. Ce résultat est en outre obtenu, avec un investissement moindre, puisque les turbines à combustion 16 utilisées dans le système de production 10 selon l'invention sont de taille plus petite.

**[Table 1]**

| | |
|---|---|
| Demande moyenne en puissance électrique du réseau 12 | 235 MW |
| Puissance électrique total générée | 4716 MW |
| Combustible économisé par le système de production 10 selon l'invention par rapport au système de l'état de la technique | 1,112 MT |
| Dioxyde de carbone non émis par le système de production 10 selon l'invention par rapport au système de l'état de la technique | 3,087 Mt |

Dans une variante non représentée évoquée plus haut, le système de production 10 produit de l'énergie mécanique destinée à un système consommateur d'énergie mécanique, en particulier au sein d'une installation d'exploitation de fluides. Le système consommateur est alors un système comprenant un organe entrainé en rotation dans une installation industrielle, en particulier un compresseur ou une pompe.

Comme précédemment, l'unité de génération de puissance 14 est une unité de génération de puissance mécanique configurée pour engendrer, aux conditions définies de site, sans refroidissement ou chauffage du flux d'air entrant 20, une puissance mécanique définie de site inférieure à la puissance mécanique maximale requise prédéfinie devant être fournie au système consommateur d'énergie mécanique aux conditions définies de site par l'unité de génération de puissance 14.

Un refroidissement ou un chauffage du flux d'air entrant 20 est mis en œuvre lorsque la puissance demandée par le système consommateur est différente de la puissance définie de site de l'unité de génération de puissance 14.

## Revendications

1. Procédé de production d'énergie électrique ou/et mécanique à destination d'un système consommateur, comprenant l'étape suivante :
- génération de puissance électrique ou/et mécanique via une unité de génération de puissance (14) comportant au moins une turbine à combustion (16), la turbine à combustion (16) comprenant un compresseur (30), une chambre de combustion (34), une turbine de détente dynamique (38), et un organe entrainé en rotation par la turbine de détente dynamique (38), la génération de puissance électrique ou/et mécanique comportant la compression d'un flux d'air entrant (20) dans le compresseur (30), le chauffage du flux d'air comprimé (32) issu du compresseur (30) dans la chambre de combustion (34) pour former un flux d'alimentation de turbine (36), et la détente, dans la turbine de détente dynamique (38), du flux d'alimentation de turbine (36) pour entrainer en rotation la turbine de détente dynamique (38),
**caractérisé en ce que** l'unité de génération de puissance (14) est configurée pour engendrer, à des conditions définies de site, sans refroidissement ou chauffage du flux d'air entrant (20), une puissance électrique ou/et mécanique définie de site inférieure à une puissance électrique ou/et mécanique maximale requise prédéfinie, devant être fournie au système consommateur aux conditions définies de site par l'unité de génération de puissance (14), le procédé comportant les étapes suivantes :
- refroidissement du flux d'air entrant (20) lorsque la puissance demandée par le système consommateur est supérieure à la puissance définie de site de l'unité de génération de puissance (14) aux conditions définies de site, et est inférieure ou égale à la puissance maximale requise prédéfinie ;
- chauffage du flux d'air entrant (20), lorsque la puissance demandée par le système consommateur est inférieure à la puissance définie de site de l'unité de génération de puissance (14) aux conditions définies de site.

2. Procédé selon la revendication 1, dans lequel la puissance définie de site de l'unité de génération de puissance (14) aux conditions définies de site est comprise entre 70 % et 90 %, notamment entre 75 % et 85 %, de la puissance maximale requise prédéfinie par le système consommateur aux conditions définies de site.

3. Procédé selon l'une quelconque des revendications 1 ou 2, dans lequel le refroidissement du flux d'air entrant (20) est mis en oeuvre dès que la puissance demandée par le système consommateur est supérieure à la puissance définie de site de l'unité de génération de puissance (14) aux conditions définies de site, le chauffage du flux d'air entrant (20) étant mis en oeuvre dès que la puissance électrique demandée par le système consommateur est inférieure à la puissance définie de site de l'unité de génération de puissance (14) aux conditions définies de site.

4. Procédé selon l'une quelconque des revendications précédentes, dans lequel le refroidissement du flux d'air entrant (20) comporte le réglage de la température d'entrée de compresseur (30) à une température minimale acceptable de flux gazeux entrant (20), le procédé comportant le réglage de la puissance délivrée au système consommateur par commande de la température du flux d'alimentation de turbine (36) en entrée de la turbine de détente dynamique (38).

5. Procédé selon la revendication 4, dans lequel, lorsque la commande de la température du flux d'alimentation de turbine (36) en entrée de la turbine de détente dynamique (38) produit une puissance délivrée inférieure à la puissance requise par le système consommateur, le procédé comporte l'application d'un incrément d'augmentation de la température d'entrée de compresseur (30) au-dessus de la température minimale acceptable de flux gazeux entrant (20), puis un nouveau réglage de la puissance délivrée au système consommateur par commande de la température du flux d'alimentation de turbine (36) en entrée de la turbine de détente dynamique (38).

6. Procédé selon l'une quelconque des revendications précédentes, dans lequel le chauffage du flux d'air entrant (20) comporte le réglage de la puissance délivrée à la puissance requise par le système consommateur par augmentation progressive de la température d'entrée de compresseur (30).

7. Procédé selon la revendication 6, comportant, simultanément à l'augmentation progressive de la température d'entrée de compresseur (30), une diminution de la température d'entrée dans la turbine de détente dynamique (38).

8. Procédé selon l'une quelconque des revendications 6 ou 7, dans lequel le compresseur (30) comporte des ailettes (46) de guidage à position variable définissant une ouverture pour le flux d'air entrant (20) dans le compresseur (30), le chauffage du flux d'air entrant (20) comportant, simultanément à l'augmentation de la température d'entrée de compresseur (30), une augmentation de l'ouverture définie par les ailettes de guidage (46).

9. Procédé selon l'une quelconque des revendications précédentes, dans lequel le système consommateur est un réseau électrique (12), la puissance générée étant une puissance électrique, l'organe entrainé en rotation étant un rotor d'un générateur électrique de la turbine à combustion (16) ou dans lequel le système consommateur est un système comprenant un organe entrainé en rotation dans une installation industrielle, en particulier un compresseur ou une pompe, la puissance générée étant une puissance mécanique.

10. Système de production d'énergie électrique ou/et mécanique (10) destinée à un système consommateur, comportant :
- une unité de génération de puissance (14) comportant au moins une turbine à combustion (16), la turbine à combustion (16) comprenant un compresseur (30), une chambre de combustion (34), une turbine de détente dynamique (38), et un organe entrainé en rotation par la turbine de détente dynamique (38), l'unité de génération de puissance étant propre à générer une puissance électrique ou/et mécanique par compression d'un flux d'air entrant (20) dans le compresseur (30), par chauffage, dans la chambre de combustion (34), du flux d'air comprimé (32) issu du compresseur (30) pour former un flux d'alimentation de turbine (36), et par détente, dans la turbine de détente dynamique (38), du flux d'alimentation de turbine (36) pour entrainer en rotation la turbine de détente dynamique (38),
**caractérisé en ce que** l'unité de génération de puissance (14) est configurée pour engendrer, à des conditions définies de site, sans refroidissement ou chauffage du flux d'air entrant (20), une puissance électrique ou/et mécanique définie de site inférieure à une puissance électrique ou/et mécanique maximale requise prédéfinie devant être fournie au système consommateur aux conditions définies de site par l'unité de génération de puissance (14),
le système de production d'énergie (10) comportant un système de commande (22) configuré pour piloter :
- un refroidissement du flux d'air entrant (20) lorsque la puissance demandée par le système consommateur est supérieure à la puissance définie de site de l'unité de génération de puissance (14) aux conditions définies de site, et est inférieure ou égale à la puissance maximale requise prédéfinie ;
- un chauffage du flux d'air entrant (20), lorsque la puissance demandée par le système consommateur est inférieure à la puissance définie de site de l'unité de génération de puissance (14) aux conditions définies de site.

11. Système de production d'énergie (10) selon la revendication 10, dans lequel l'unité de génération de puissance (14) comporte plusieurs turbines à combustion (16).

12. Système de production d'énergie (10) selon l'une quelconque des revendications 10 ou 11, comportant un système d'échange thermique (18), monté en amont du compresseur (30) pour chauffer ou/et refroidir le flux d'air entrant (20).

13. Système de production d'énergie (10) selon la revendication 12, dans lequel le système d'échange thermique (18) est propre à recevoir un courant de réchauffage (68) produit à partir d'un flux provenant de la turbine à combustion (16) ou ayant reçu des calories d'un flux provenant de la turbine à combustion (16) pour réchauffer le flux d'air entrant (20).

14. Système de production d'énergie (10) selon l'une quelconque des revendications 10 à 13, comportant un refroidisseur à absorption, le système d'échange thermique (18) étant propre à recevoir un courant de refroidissement (64) provenant du refroidisseur à absorption.

15. Système de production d'énergie (10) selon la revendication 14, dans lequel le courant de refroidissement (64) est produit dans le refroidisseur à absorption à partir de calories d'un flux provenant de la turbine à combustion (16).

## Patentansprüche

1. Verfahren zur Erzeugung von elektrischer oder/und mechanischer Energie für ein Verbrauchersystem, umfassend den folgenden Schritt:
- Erzeugen elektrischer oder/und mechanischer Leistung über eine Leistungserzeugungseinheit (14), umfassend mindestens eine Verbrennungsturbine (16), die Verbrennungsturbine (16) umfassend einen Verdichter (30), eine Brennkammer (34), eine dynamische Expansionsturbine (38) und ein durch die dynamische Expansionsturbine (38) drehangetriebenes Element, das Erzeugen von elektrischer und/oder mechanischer Leistung umfassend das Verdichten eines eintretenden Luftstroms (20) in dem Verdichter (30), das Erwärmen des verdichteten Luftstroms (32) aus dem Verdichter (30) in der Brennkammer (34), um einen Turbinenspeisestrom (36) zu bilden, und das Entspannen des Turbinenspeisestroms (36) in der dynamischen Expansionsturbine (38), um die dynamische Expansionsturbine (38) in Drehung zu versetzen,
**dadurch gekennzeichnet, dass** die Leistungserzeugungseinheit (14) konfiguriert ist, um bei standortdefinierten Bedingungen ohne Kühlung oder Erwärmung des eintretenden Luftstroms (20) eine standortdefinierte elektrische und/oder mechanische Leistung zu erzeugen, die geringer ist als eine vordefinierte erforderliche maximale elektrische und/oder mechanische Leistung, die dem Verbrauchersystem bei den standortdefinierten Bedingungen durch die Leistungserzeugungseinheit (14) zugeführt werden soll, das Verfahren umfassend die folgenden Schritte:
- Kühlen des eintretenden Luftstroms (20), wenn die von dem Verbrauchersystem angeforderte Leistung größer ist als die definierte Standortleistung der Leistungserzeugungseinheit (14) bei definierten Standortbedingungen und kleiner als oder gleich wie die vordefinierte maximal erforderliche Leistung;
- Erwärmen des eintretenden Luftstroms (20), wenn die von dem Verbrauchersystem angeforderte Leistung geringer ist als die standortdefinierte Leistung der Leistungserzeugungseinheit (14) bei standortdefinierten Bedingungen.

2. Verfahren nach Anspruch 1, wobei die standortdefinierte Leistung der Stromerzeugungseinheit (14) bei standortdefinierten Bedingungen zwischen 70 % und 90 %, insbesondere zwischen 75 % und 85 %, der von dem Verbrauchersystem vordefinierten maximal erforderlichen Leistung bei standortdefinierten Bedingungen liegt.

3. Verfahren nach einem der Ansprüche 1 oder 2, wobei die Kühlung des eintretenden Luftstroms (20) eingesetzt wird, sobald die von dem Verbrauchersystem angeforderte Leistung größer ist als die standortdefinierte Leistung der Stromerzeugungseinheit (14) bei standortdefinierten Bedingungen, wobei die Erwärmung des eintretenden Luftstroms (20) eingesetzt wird, sobald die von dem Verbrauchersystem angeforderte elektrische Leistung geringer ist als die standortdefinierte Leistung der Stromerzeugungseinheit (14) bei den standortdefinierten Bedingungen.

4. Verfahren nach einem der vorherigen Ansprüche, wobei das Kühlen des eintretenden Luftstroms (20) ein Einstellen der Verdichtereintrittstemperatur (30) auf eine akzeptable Mindesttemperatur des eintretenden Gasstroms (20) umfasst, wobei das Verfahren das Einstellen der an das Verbrauchersystem zugeführten Leistung durch Steuern der Temperatur des Turbinenspeisestroms (36) am Eingang der dynamischen Expansionsturbine (38) umfasst.

5. Verfahren nach Anspruch 4, wobei, wenn die Steuerung der Temperatur des Turbinenspeisestroms (36) am Eingang der dynamischen Expansionsturbine (38) eine abgegebene Leistung erzeugt, die geringer ist als die von dem Verbrauchersystem angeforderte Leistung, das Verfahren die Anwendung eines Inkrements zur Erhöhung der Verdichtereintrittstemperatur (30) über die akzeptable Mindesttemperatur des eintretenden Gasstroms (20) und dann eine Neueinstellung der dem Verbrauchersystem zugeführten Leistung durch Steuerung der Temperatur des Turbinenspeisestroms (36) am Eingang der dynamischen Expansionsturbine (38) umfasst.

6. Verfahren nach einem der vorherigen Ansprüche, wobei das Erwärmen des eintretenden Luftstroms (20) das Einstellen der zugeführten Leistung auf die von dem Verbrauchersystem angeforderte Leistung durch schrittweises Erhöhen der Verdichtereintrittstemperatur (30) umfasst.

7. Verfahren nach Anspruch 6, umfassend gleichzeitig mit dem allmählichen Anstieg der Verdichtereintrittstemperatur (30) eine Senkung der Eintrittstemperatur in die dynamische Expansionsturbine (38).

8. Verfahren nach einem der Ansprüche 6 oder 7, wobei der Verdichter (30) positionsveränderliche Leitschaufeln (46) aufweist, die eine Öffnung für den eintretenden Luftstrom (20) in den Verdichter (30) definieren, das Erwärmen des eintretenden Luftstroms (20) umfassend, gleichzeitig mit der Erhöhung der Verdichtereintrittstemperatur (30), eine Vergrößerung der durch die Leitschaufeln (46) definierten Öffnung.

9. Verfahren nach einem der vorherigen Ansprüche, wobei das Verbrauchersystem ein Stromnetz (12) ist, wobei die erzeugte Leistung eine elektrische Leistung ist, wobei das drehend angetriebene Element ein Rotor eines elektrischen Generators der Verbrennungsturbine (16) ist oder wobei das Verbrauchersystem ein System ist, das ein drehend angetriebenes Element in einer Industrieanlage, insbesondere einen Verdichter oder eine Pumpe, umfasst, wobei die erzeugte Leistung eine mechanische Leistung ist.

10. System zur Erzeugung elektrischer oder/und mechanischer Energie (10), die für ein Verbrauchersystem bestimmt ist, umfassend:
- eine Leistungserzeugungseinheit (14), umfassend mindestens eine Verbrennungsturbine (16), die Verbrennungsturbine (16) umfassend einen Verdichter (30), eine Brennkammer (34), eine dynamische Expansionsturbine (38) und ein durch die dynamische Expansionsturbine (38) drehangetriebenes Element, wobei die Stromerzeugungseinheit geeignet ist, um elektrische und/oder mechanische Leistung zu erzeugen, indem ein eintretender Luftstrom (20) in dem Verdichter (30) komprimiert wird, indem der komprimierte Luftstrom (32) aus dem Verdichter (30) in der Brennkammer (34) erwärmt wird, um einen Turbinenspeisestrom (36) zu bilden, und indem der Turbinenspeisestrom (36) in der dynamischen Expansionsturbine (38) entspannt wird, um die dynamische Expansionsturbine (38) in Drehung zu versetzen,
**dadurch gekennzeichnet, dass** die Leistungserzeugungseinheit (14) konfiguriert ist, um bei standortdefinierten Bedingungen ohne Kühlung oder Erwärmung des eintretenden Luftstroms (20) eine standortdefinierte elektrische oder/und mechanische Leistung zu erzeugen, die geringer ist als eine vordefinierte erforderliche maximale elektrische oder/und mechanische Leistung, die dem Verbrauchersystem bei standortdefinierten Bedingungen durch die Leistungserzeugungseinheit (14) zugeführt werden muss,
das Energieerzeugungssystem (10) umfassend ein Steuersystem (22) umfasst, das zum Steuern von Folgendem konfiguriert ist:
- ein Kühlen des ankommenden Luftstroms (20), wenn die von dem Verbrauchersystem angeforderte Leistung größer ist als die definierte Standortleistung der Leistungserzeugungseinheit (14) bei definierten Standortbedingungen und kleiner als oder gleich wie die vordefinierte maximal erforderliche Leistung;
- ein Erwärmen des ankommenden Luftstroms (20), wenn die von dem Verbrauchersystem angeforderte Leistung geringer ist als die standortdefinierte Leistung der Leistungserzeugungseinheit (14) bei standortdefinierten Bedingungen.

11. Energieerzeugungssystem (10) nach Anspruch 10, wobei die Leistungserzeugungseinheit (14) mehrere Verbrennungsturbinen (16) umfasst.

12. Energieerzeugungssystem (10) nach einem der Ansprüche 10 oder **11,** umfassend ein Wärmetauschsystem (18), das stromaufwärts vom Verdichter (30) montiert ist, um den eintretenden Luftstrom (20) zu erwärmen oder/und zu kühlen.

13. Energieerzeugungssystem (10) nach Anspruch 12, wobei das Wärmeaustauschsystem (18) geeignet ist, um einen Aufwärmstrom (68) aufzunehmen, der aus einem Strom von der Verbrennungsturbine (16) erzeugt wird oder Kalorien von einem Strom von der Verbrennungsturbine (16) aufgenommen hat, um den eintretenden Luftstrom (20) aufzuwärmen.

14. Energieerzeugungssystem (10) nach einem der Ansprüche 10 bis 13, umfassend einen Absorptionskühler, wobei das Wärmetauschsystem (18) geeignet ist, um einen Kühlstrom (64) aus dem Absorptionskühler aufzunehmen.

15. Energieerzeugungssystem (10) nach Anspruch 14, wobei der Kühlstrom (64) in dem Absorptionskühler aus Kalorien eines Stroms von der Verbrennungsturbine (16) erzeugt wird.

## Claims

1. A method for producing electrical and/or mechanical energy intended for a consumer system, including the following step:
- generation of electrical and/or mechanical power via a power generation unit (14) including at least one combustion turbine (16), the combustion turbine (16) including a compressor (30), a combustion chamber (34), a dynamic expansion turbine (38), and a component rotated by the dynamic expansion turbine (38), the electrical and/or mechanical power generation including the compression of an air flow (20) entering the compressor (30), the heating of the compressed air flow (32) coming from the compressor (30) in the combustion chamber (34), so as to form a flow feeding the turbine (36), and the expansion, in the dynamic expansion turbine (38), of the flow feeding the turbine (36) so as to rotate the dynamic expansion turbine (38).
**characterized in that** the power generation unit (14) is configured for generating, under defined site conditions, without any cooling or heating of the incoming air flow (20), a defined site electrical and/or mechanical power less than a predefined maximum required electrical and/or mechanical power, to be supplied to the consumer system at the defined site conditions, by the power generation unit (14), the method including the following steps:
- cooling of the incoming air flow (20) when the power requested by the consumer system is greater than the defined site power of the power generation unit (14) at the defined site conditions, and is lower than or equal to the predefined maximum required power;
- heating of the incoming air flow (20) when the power requested by the consumer system is lower than the defined site power of the power generation unit (14) at the defined site conditions.

2. The method according to claim 1, wherein the defined site power of the power generation unit (14) at the defined site conditions is comprised between 70% and 90%, in particular between 75% and 85%, of the maximum required power predefined by the consumer system at the defined site conditions.

3. The method according to any of claims 1 or 2, wherein cooling of the incoming air flow (20) is implemented as soon as the power requested by the consumer system is greater than the defined site power of the power generation unit (14) at the defined site conditions, the heating of the incoming air flow (20) being implemented as soon as the electrical power demanded by the consumer system is less than the defined site power of the power generation unit (14) at the defined site conditions.

4. The method according to any of the preceding claims, wherein cooling the incoming air flow (20) includes adjusting the compressor (30) inlet temperature to a minimum acceptable temperature of the inlet gas flow (20), the method including the adjustment of the power delivered to the consumer system by controlling the temperature of the flow feeding the turbine (36) at the inlet of the dynamic expansion turbine (38).

5. The method according to claim 4, wherein, when the control of the temperature of the flow feeding the turbine (36) at the inlet of the dynamic expansion turbine (38) produces a power output less than the power required by the consumer system, the method includes the application of an increment of increase of the compressor (30) inlet temperature above the minimum acceptable temperature of the inlet gas flow (20), then a new adjustment of the power delivered to the consumer system by controlling the temperature of the flow feeding the turbine (36) at the inlet of the dynamic expansion turbine (38).

6. The method according to any of the preceding claims, wherein the heating of the incoming air flow (20) includes adjusting the delivered power to the power required by the consumer system by gradually increasing the compressor (30) inlet temperature.

7. The method according to claim 6, including, simultaneously with the gradual increase of the compressor (30) inlet temperature, a decrease of the inlet temperature at the dynamic expansion turbine (38).

8. The method according to any of claims 6 or 7, wherein the compressor (30) has guide vanes variable in position (46) defining an opening for the incoming air flow (20) into the compressor (30), the heating of the incoming air flow (20) including, simultaneously with the increase of the compressor (30) inlet temperature, an increase of the opening defined by the guide vanes (46).

9. The method according to any of the preceding claims, wherein the consumer system is an electrical grid (12), the power generated being an electrical power, the rotating component being a rotor of an electric generator of the combustion turbine (16) or wherein the consumer system is a system including a rotating component in an industrial installation, more particularly a compressor or a pump, the power generated being a mechanical power.

10. A system for producing electrical and/or mechanical power (10) for a consumer system, including:
- a power generation unit (14) including at least one combustion turbine (16), the combustion turbine (16) including a compressor (30), a combustion chamber (34), a dynamic expansion turbine (38), and a component rotated by the dynamic expansion turbine (38), the power generation unit being suitable for generating an electrical and/or mechanical power by compressing an airflow (20) entering the compressor (30), by heating, in the combustion chamber (34), of the compressed air flow (32) coming from the compressor (30), so as to form a flow feeding the turbine (36), and by expansion, in the dynamic expansion turbine (38), of the flow feeding the turbine (36) so as to rotate the dynamic expansion turbine (38),
**characterized in that** the power generation unit (14) is configured for generating, at defined site conditions, without any cooling or heating of the incoming air flow (20), a defined site electrical and/or mechanical power less than a predefined maximum required electrical and/or mechanical power to be supplied to the consumer system at the defined site conditions, by the power generation unit (14),
the energy production system (10) including a control system (22) configured for controlling:
- a cooling of the incoming air flow (20) when the power requested by the consumer system is greater than the defined site power of the power generation unit (14) at the defined site conditions, and is lower than or equal to the predefined maximum required power;
- a heating of the incoming air flow (20) when the power requested by the consumer system is lower than the defined site power of the power generation unit (14) at the defined site conditions.

11. The energy production system (10) according to claim 10, wherein the power generation unit (14) includes multiple combustion turbines (16).

12. The energy production system (10) according to any one of claims 10 or 11, including a heat exchange system (18) mounted upstream of the compressor (30) for heating and/or cooling the incoming air flow (20).

13. The energy production system (10) according to claim 12, wherein the heat exchange system (18) is suitable for receiving a heating stream (68) produced from a flow coming from the combustion turbine (16) or having received calories from a flow coming from the combustion turbine (16), for heating the incoming air flow (20).

14. The energy production system (10) according to any one of claims 10 to 13 including an absorption chiller, the heat exchange system (18) being suitable for receiving a cooling stream (64) coming from the absorption chiller.

15. The energy production system (10) according to claim 14, wherein the cooling stream (64) is produced in the absorption chiller from calories of a flow coming from the combustion turbine (16).
